# FASCICULE DE BREVET EUROPEEN

(11) **EP 0 553 036 B1**
(45) Date de publication et mention de la délivrance du brevet: **05.06.1996**
(21) Numéro de dépôt: 93400162.9
(22) Date de dépôt: 22.01.1993
(51) Int. Cl.: H02K 23/20, H02K 23/36

(54) **Moteur électrique à courant continu à vitesses prédéterminées**
Elektrischer Gleichstrommotor mit vorbestimmten Geschwindigkeiten
Electrical DC motor with predetermined speeds

(30) Priorité: 24.01.1992 FR 9200769
(43) Date de publication de la demande: 28.07.1993
(73) Titulaire: ECIA - EQUIPEMENTS ET COMPOSANTS POUR L'INDUSTRIE AUTOMOBILE, F-25400 Audincourt (FR)
(72) Inventeur: Cuchet, Daniel, F-25200 Montbeliard (FR); Alberti, Angelo, F-25400 Audincourt (FR)
(74) Mandataire: Obolensky, Michel

(56) Documents cités:
- EP-A- 0 072 283
- EP-A- 0 455 015
- EP-A- 0 479 658
- DE-C- 3 723 369
- DE-C- 3 812 190
- GB-A- 828 798

## Description

La présente invention est relative aux moteurs à courant continu et se rapporte plus particulièrement aux moteurs de ce type à excitation indépendante notamment obtenue par des aimants permanents, à induit tournant supportant un bobinage parallèle imbriqué et possédant au moins n paires de pôles et n paires de voies d'enroulement.

L'invention vise à perfectionner les moteurs du type précité en créant un moteur à courant continu à vitesses prédéterminées.

Un tel moteur est connu du document EP-A-0479658 appartenant à l'état de la technique tel que défini par l'Art.54.3 CBE.

Elle a donc pour objet un moteur à courant continu à excitation séparée à induit tournant à bobinage parallèle imbriqué et ayant n paires de pôles et n paires de voies d'enroulement, le bobinage d'induit étant constitué de 2n sections destinées à être connectées à une source d'alimentation, comportant des moyens de commutation destinés à modifier les combinaisons de sections de bobinage alimentées par la source en fonction de la vitesse de rotation du moteur à obtenir, les moyens de commutation comprenant au moins un premier et un second commutateurs, le premier commutateur étant connecté entre le pôle positif de l'alimentation et l'un des deux points d'une paire de voies d'enroulement acceptant cette polarité, l'autre point étant directement connecté à l'alimentation, et le second commutateur étant connecté entre le pôle négatif de l'alimentation et l'un des deux points d'une paire de voies d'enroulement acceptant cette polarité, l'autre point étant directement connecté à l'alimentation, l'ouverture simultanée du premier et du second commutateurs définissant une vitesse de rotation minimale du moteur, l'ouverture de l'un des premier et second commutateurs simultanément à la fermeture de l'autre définissant une vitesse de rotation intermédiaire et la fermeture simultanée des premier et second commutateurs définissant une vitesse de rotation maximale dudit moteur.

L'invention sera mieux comprise à l'aide de la description qui va suivre, donnée uniquement à titre d'exemple et faite en se référant aux dessins annexés, sur lesquels :
- la Fig.1 est un schéma synoptique d'un moteur suivant l'invention connecté pour tourner à une vitesse minimale;
- la Fig.2 est un schéma correspondant à celui de la Fig.1 connecté pour tourner à une vitesse intermédiaire;
- la Fig.3 est un autre schéma correspondant aux schémas précédents du moteur connecté pour tourner à une vitesse intermédiaire;
- la Fig.4 est un schéma correspondant aux schémas des Fig.1 à 3 du moteur connecté pour tourner à une vitesse maximale; et
- la Fig.5 est un graphique montrant les diverses caractéristiques de fonctionnement du moteur suivant l'invention.

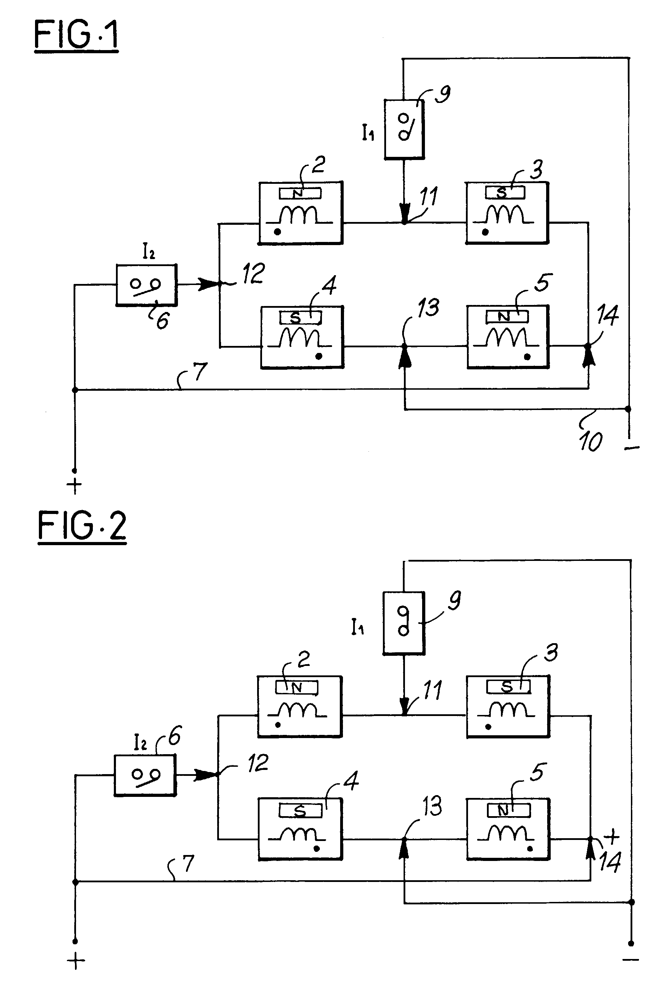

Sur la Fig.1, on a représenté le schéma synoptique de l'induit d'un moteur à courant continu suivant l'invention.

L'induit de ce moteur électrique comporte un bobinage parallèle imbriqué dont les bobines 2,3,4,5 symbolisent chacune une section de bobinage d'une voie d'enroulement soumise à l'action d'un même pôle magnétique, connectées en série.

Une section de bobinage représente l'ensemble des bobines d'une voie d'enroulement soumises à l'action d'un même pôle magnétique.

L'inducteur à aimants permanents de ce moteur est de type classique et n'est donc pas représenté.

Les bobines 2, 3, 4 et 5 symbolisent les quatre voies d'enroulement. Elles représentent le groupement de conducteurs sous l'influence d'un même pôle magnétique en fonction du nombre d'encoches.

Le point de jonction des bobines 2 et 4, est connecté à la borne positive d'une alimentation en courant continu par l'intermédiaire d'un commutateur de puissance 6, constitué soit par un contact de relais, soit par un transistor de puissance ou par tout autre dispositif de commutation.

Le point de jonction des bobines 3 et 5 est également connecté à la borne positive de l'alimentation par un conducteur 7.

Le point de jonction des bobines 2 et 3 est connecté à la borne négative de l'alimentation par un commutateur de puissance 9, constitué par un contact de relais ou un transistor de puissance.

Le point de jonction des bobines 4 et 5 est connecté à la borne négative de l'alimentation par un conducteur 10.

Les points de jonction 11,12,13,14 matérialisés sur les figures par des flèches, symbolisent les contacts balais-collecteurs du moteur.

Dans le cas représenté à la Fig.1, les commutateurs 6 et 9 sont ouverts.

Sur la Fig.2, on a représenté le même induit que celui décrit en référence à la Fig.1, mais dont le commutateur 6 est ouvert et le commutateur 9 est fermé.

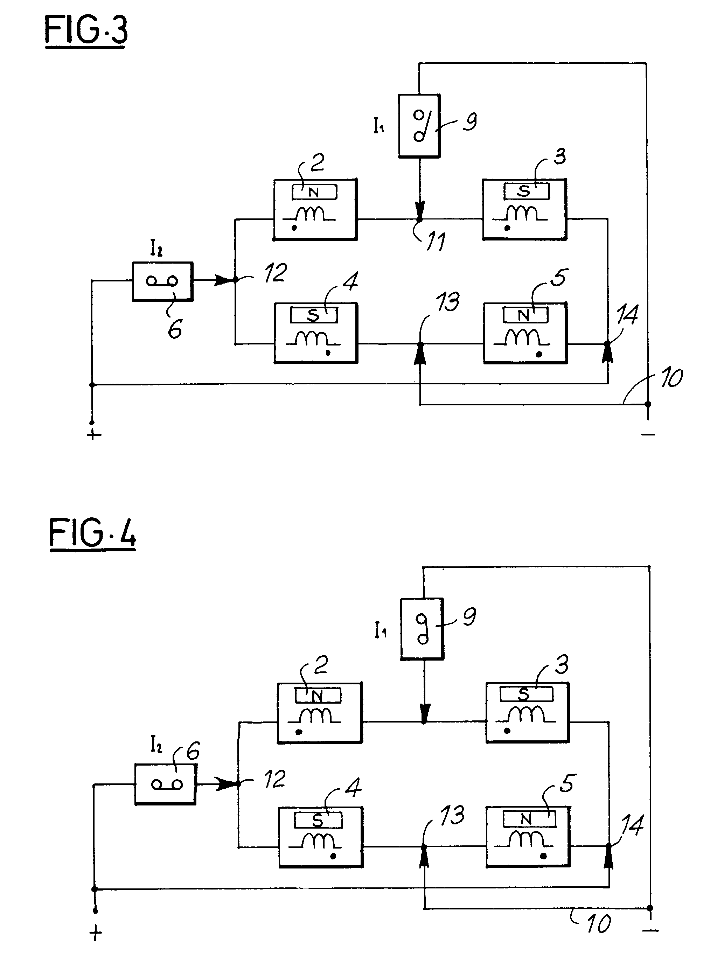

Le schéma de la Fig.3 est le même que celui de la Fig.2, mais le commutateur 6 est fermé et le commutateur 9 est ouvert.

Sur le schéma de la Fig.4 qui est le même que les précédents, les commutateurs 6 et 9 sont fermés.

La variation de vitesse du moteur suivant l'invention est assurée par une commande simultanée de l'état ouvert ou fermé des commutateurs 6 et 9.

Dans le cas de la Fig.1, le fait que les commutateurs 6 et 9 soient ouverts, provoque la mise en parallèle aux bornes de l'alimentation de deux branches formées respectivement des sections de bobinage 2,3 et 4 connectées en série d'une part et de la section 5 d'autre part.

A cette configuration correspond une vitesse de rotation minimale du moteur.

Dans le cas de la Fig.2, la fermeture du commutateur 9 et l'ouverture du commutateur 6 provoque la mise en parallèle des sections 3 et 5 alors que les sections 2 et 4 mises en série, sont connectées toutes deux au pôle négatif de l'alimentation.

Dans le cas de la Fig.3, la fermeture du commutateur 6 et l'ouverture du commutateur 9 provoquent la mise en parallèle des sections 4 et 5, les sections 2 et 3 mises en série, étant toutes deux connectées à la borne positive de l'alimentation.

Les cas des Fig.2 et 3 sont donc des cas équivalents qui permettent d'obtenir une vitesse de rotation intermédiaire.

Dans le cas de la Fig.4, la fermeture des commutateurs 6 et 9 provoque la mise en parallèle de toutes les sections 2 à 5 aux bornes de l'alimentation.

Dans ce dernier cas, on obtient une vitesse de rotation maximale du moteur.

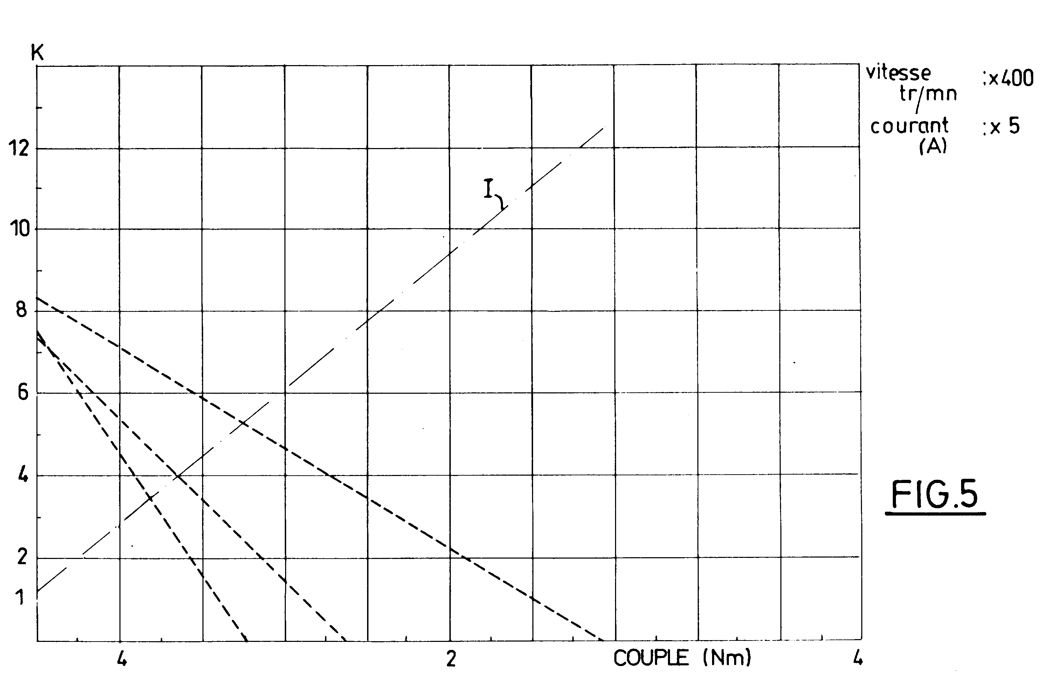

Sur le graphique de la Fig.5, on a porté en abscisses le couple en Nm et en ordonnées des coefficients K dont la multiplication par les chiffres figurant dans le tableau d'échelles du graphique, permet d'obtenir des valeurs correspondantes de vitesse, et de courant du moteur suivant l'invention.

Les trois droites en pointillé correspondent chacune à une caractéristique couple-vitesse.

Les commutateurs 6 et 9 fermés donnent la caractéristique où le couple est maximal.

Les commutateurs 6 et 9 ouverts donnent la caractéristique où le couple est minimal.

Les commutateurs 6 ouvert et 9 fermé, ou 6 fermé et 9 ouvert, donnent la caractéristique intermédiaire.

La droite en trait mixte représente la caractéristique couple-intensité.

L'exemple représenté à la Fig.5 est celui d'un moteur suivant l'invention alimenté par une tension de 13,5 volts.

Les courbes de la Fig.5 montrent donc que grâce à l'agencement de l'invention, il est possible d'obtenir les différentes vitesses sans introduire de résistances chutrices supplémentaires, qui génèrent des pertes par effet Joule.

Outre la variation de vitesse, une telle solution permet de favoriser les démarrages difficiles.

Avec la possibilité de plusieurs niveaux de courant de démarrage, on évite le phénomène de démagnétisation des aimants permanents qui nécessite une qualité d'aimants supérieure aux besoins du fonctionnement normal du moteur.

On notera par ailleurs que la solution suivant l'invention conserve au moteur électrique, son architecture d'origine.

Lorsque les éléments de commutation sont constitués par des transistors de puissance associés à une logique de commande, les éléments de commutation peuvent être intégrés à la plaque porte-balais (non représentée).

Dans le mode de réalisation qui vient d'être décrit, le bobinage d'induit est représenté comme ayant quatre ensembles de bobines.

On comprendra cependant que l'invention s'applique également à un moteur à courant continu, à excitation indépendante ayant un nombre de voies d'enroulement et donc de pôles plus important.

Le nombre et la disposition des commutateurs associés à un tel induit sera alors fonction du nombre de vitesses de rotation prédéterminées à obtenir.

## Revendications

1. Moteur à courant continu à excitation séparée à induit tournant à bobinage parallèle imbriqué et ayant n paires de pôles et n paires de voies d'enroulement, le bobinage d'induit étant constitué de 2n sections (2,3, 4,5) destinées à être connectées à une source d'alimentation, comportant des moyens de commutation (6,9) destinés à modifier les combinaisons de sections de bobinage alimentées par la source en fonction de la vitesse de rotation du moteur à obtenir, les moyens de commutation comprenant au moins un premier et un second commutateurs (6,9), le premier commutateur (6) étant connecté entre le pôle positif de l'alimentation et l'un des deux points (12) d'une paire de voies d'enroulement acceptant cette polarité, l'autre point (14) étant directement connecté à l'alimentation, et le second commutateur (9) étant connecté entre le pôle négatif de l'alimentation et l'un des deux points (11) d'une paire de voies d'enroulement acceptant cette polarité, l'autre point (13) étant directement connecté à l'alimentation, l'ouverture simultanée du premier et du second commutateurs (6,9) définissant une vitesse de rotation minimale du moteur, l'ouverture de l'un des premier et second commutateurs (6,9) simultanément à la fermeture de l'autre (9,6) définissant une vitesse de rotation intermédiaire et la fermeture simultanée des premier et second commutateurs définissant une vitesse de rotation maximale dudit moteur.

## Patentansprüche

1. Gleichstrommotor mit Fremderregung mit Drehanker mit überlappender Parallelwicklung, der n Polpaare und n Ankerzweigpaare aufweist, wobei die Ankerwicklung von 2n Teilen (2, 3, 4, 5) gebildet wird, die an eine Versorgungsquelle angeschlossen werden sollen, bestehend aus Umschaltmitteln (6, 9), die die Kombinationen von Wicklungsteilen, die von der Quelle in Abhängigkeit von der zu erzielenden Drehgeschwindigkeit des Motors versorgt werden, ändern sollen, wobei die Umschaltmittel aus zumindest einem ersten und einem zweiten Schalter (6, 9) bestehen, wobei der erste Schalter (6) zwischen dem positiven Pol der Versorgung und einem der beiden Punkte (12) eines Ankerzweigpaares, das diese Polarität annimmt, angeschlossen ist, wobei der andere Punkt (14) direkt an die Versorgung angeschlossen ist, und wobei der zweite Schalter (9) zwischen dem negativen Pol der Versorgung und einem der beiden Punkte (11) eines Ankerzweigpaares, das diese Polarität annimmt, angeschlossen ist, wobei der andere Punkt (13) direkt an die Versorgung angeschlossen ist, wobei die gleichzeitige Öffnung des ersten und des zweiten Schalters (6, 9) eine minimale Drehgeschwindigkeit des Motors definiert, die Öffnung des ersten oder des zweiten Schalters (6, 9) gleichzeitig mit dem Schließen des anderen (9, 6) eine Zwischendrehgeschwindigkeit definiert und das gleichzeitige Schließen des ersten und des zweiten Schalters eine maximale Drehgeschwindigkeit des Motors definiert.

## Claims

1. Separately excited direct-current motor having a rotating armature with lap-wound coils and having n pairs of poles and n pairs of winding paths, the armature coil system consisting of 2n sections (2, 3, 4, 5) intended to be connected to a power supply source, including switching means (6, 9) intended to modify the combinations of coil sections supplied by the source depending on the rotational speed of the motor to be obtained, the switching means comprising at least first and second switches (6, 9), the first switch (6) being connected between the positive pole of the power supply and one of the two points (12) of a pair of winding paths accepting this polarity, the other point (14) being connected directly to the power supply, and the second switch (9) being connected between the negative pole of the power supply and one of the two points (11) of a pair of winding paths accepting this polarity, the other point (13) being connected directly to the power supply, the simultaneous opening of the first and second switches (6, 9) defining a minimum rotational speed of the motor, the opening of one of the first and second switches (6, 9) simultaneously with the closing of the other (9, 6) defining an intermediate rotational speed, and the simultaneous closing of the first and second switches defining a maximum rotational speed of the said motor.
